# EUROPÄISCHE PATENTSCHRIFT

(11) **EP 2 069 115 B1**
(45) Veröffentlichungstag und Bekanntmachung des Hinweises auf die Patenterteilung: **13.01.2010**
(21) Anmeldenummer: 07817569.2
(22) Anmeldetag: 25.09.2007
(51) Int. Cl.: B26F 1/40, B21D 28/02, B23D 31/00

(54) **VERFAHREN ZUR BEARBEITUNG EINES FENSTERBESCHLAGES**
METHOD OF PROCESSING A WINDOW FITTING
PROCÉDÉ D'USINAGE D'UNE FERRURE DE FENÊTRE

(30) Priorität: 25.09.2006 DE 102006045534
(43) Veröffentlichungstag der Anmeldung: 17.06.2009
(73) Patentinhaber: Reiplinger GmbH & Co.KG, 06528 Edersleben (DE)
(72) Erfinder: SCHWARZ, Frank, 54529 Spangdahlem (DE)
(74) Vertreter: Wieske, Thilo
(86) Internationale Anmeldenummer: PCT/DE2007/001727
(87) Internationale Veröffentlichungsnummer: WO 2008/040311

(56) Entgegenhaltungen:
- DE-U1- 29 615 383
- DE-U1-202004 008 541
- DE-U1-202006 005 380

## Beschreibung

Die Erfindung betrifft ein Verfahren zur Bearbeitung eines Fensterbeschlages nach dem Oberbegriff des Anspruchs 1.

Es ist bereits ein derartiges Verfahren bekannt, bei dem zur Herstellung eines Fensterbeschlages vorbereitend zu der Ablängung der Stulpstange und der Treibstange in wenigstens eine Seitenkante der Treibstange ein zahnförmiges Profil eingebracht wird. Das zahnförmige Profil wird bei dieser Vorgehensweise vorab in die Seitenkante eingebracht. Da die Position noch nicht definiert ist, an der die Treibstange abgelängt wird, wird daher bei dieser Vorgehensweise auf einer vergleichsweise großen Länge der Treibstange das zahnförmige Profil eingebracht. Dies kann durch einen Stanzvorgang erfolgen. Anschließend wird die Treibstange entsprechend den Einsatzbedingungen abgelängt, die durch die Fenstergröße vorgegeben sind. Über dieses zahnförmige Profil ist die Treibstange bewegbar, um dadurch bei eingebautem Fenster und damit bei eingebauter Treib- und Stulpstange das Öffnen, Schließen und Verriegeln des Fensters bewirken zu können.

Ebenso ist bereits eine Stanze bekannt, bei der eine Matrize zwischen der Treibstange und der Stulpstange positioniert wird, wobei zwei Stanzstempel von gegenüber liegenden Seiten der Matrize die Stulpstange und die Treibstange ablängen. Indem diese Stempel gleichzeitig angreifen, wird durch die Kraftbeaufschlagung der beiden Stempel, die gleichzeitig erfolgt, eine Abstützung der Matrize bewirkt. Die Verhältnisse sind in dem Gebrauchsmuster DE 29615383 U1 beschrieben.

Der vorliegenden Erfindung liegt die Aufgabe zu Grunde, die Herstellung des Fensterbeschlages zu vereinfachen.

Diese Aufgabe wird nach der vorliegenden Erfindung durch ein Verfahren gemäß Anspruch 1 gelöst.

Bisher ist das Profil durchgängig bei allen Fenstern ein zahnförmiges Profil, das in eine der Seitenkanten der Treibstange eingebracht wird. Es liegt dabei im Rahmen der Erfindung, auch andere denkbare Profile durch einen entsprechenden Stanzvorgang herzustellen, die dazu verwendet werden können, die Bewegung der Treibstange zu bewirken. Ohne Beschränkung dieser Allgemeinheit sollen im Folgenden die Vorteile und die Funktionsweise der Erfindung anhand des bisher üblichen zahnförmigen Profils erläutert werden, das in die Seitenkante der Treibstange eingebracht wird.

Dabei erweist es sich als vorteilhaft, dass der separate Arbeitsschritt vorweg eingespart werden kann. Dies ist insbesondere deswegen vorteilhaft, weil es bisher wegen der noch nicht definierten Position der Ablängung der Treibstange notwendig war, das zahnförmige Profil auf einer vergleichsweise großen Länge der Treibstange einzubringen. Das bedeutet auch, dass die gesamte Schnittlänge entlang des zahnförmigen Profils vergleichsweise lang wurde. Dadurch waren bei dem Stanzvorgang vergleichsweise große Kräfte notwendig, was dazu führte, dass die Stanze entsprechend groß dimensioniert werden musste.

Vorteilhaft ist die Position des Stücks, auf dem die Treibstange mit dem bahnförmigen Profil zu versehen ist, durch die dann feststehende Position der Ablängung der Treibstange bereits definiert, so dass durch die räumliche Zuordnung der Stanze zur Herstellung des zahnförmigen Profils zu der Stanze zur Ablängung der Treibstange die Schnittlänge entlang des zahnförmigen Profils gegenüber dem Stand der Technik deutlich kürzer sein kann. Dadurch müssen von dieser Stanze deutlich geringere Kräfte aufgebracht werden.

Außerdem lässt sich durch die beschriebene Vorgehensweise der separate Arbeitsschritt vorab einsparen.

Das Verfahren kann beispielsweise mit einer Vorrichtung ausgeführt werden, bei der der Ablängstempel außer der Schneide zur Ablängung der Treibstange auch die Kontur der Verzahnung beinhaltet. Es ist aber ebenso auch eine Ausgestaltung der Vorrichtung denkbar, bei der die Kontur der Verzahnung im Gegenstempel oder in der Matrize enthalten sein kann.

Bei der Ausgestaltung des Verfahrens nach Anspruch 2 sind in dem Arbeitsschritt die Stanzvorgänge der Ablängung der Treibstange und der Einbringung des Profils in die Seitenkante derart getrennt, dass die Stanzvorgänge bei einer Bewegung eines Arbeitszylinders zeitlich nacheinander ausgeführt werden.

Dadurch werden vorteilhaft die Kräfte begrenzt, die zur Durchführung des Stanzvorganges notwendig sind, indem die entsprechenden Schnitte zeitlich nacheinander ausgeführt werden.

Die Vorrichtung kann so ausgestaltet sein, dass der Ablängstempel bei der Bewegung zeitlich nacheinander so auf die Treibstange auftrifft, dass der Ablängvorgang und der Vorgang zur Einbringung des Profils nacheinander stattfinden.

Bei der Ausgestaltung des Verfahrens nach Anspruch 3 wird auch die Ablängung der Stulpstange in dem Arbeitsschritt durch einen Stanzvorgang vorgenommen, wobei dieser Stanzvorgang zeitlich versetzt zu der Ablängung der Treibstange sowie der Einbringung des Profils in die Treibstange vorgenommen wird.

Vorteilhaft werden durch diese Ausgestaltung die notwendigen Kräfte zur Durchführung der Stanzvorgänge weiter begrenzt.

Zur Durchführung dieses Verfahrens kann die Stanze so ausgestaltet sein, dass die Schneidkante zur Ablängung der Stulpstange bei der Bewegung des Stempels zeitlich so auf die Stulpstange auftrifft, dass dieses Auftreffen zeitlich vesetzt ist zu den Stanzvorgänge zur Ablängung der Treibstange sowie der Einbringung des Profils in die Treibstange.

Bei der Ausgestaltung des Verfahrens nach Anspruch 4 ist das aus Treibstange und Stulpstange bestehende Werkstück zwischen zwei Stempel mit gegenläufiger Aktionsrichtung zur Durchführung des Stanzvorgangs einführbar. Zumindest während des Einbringens des Profils in die Treibstange ist der Stempel zur Ablängung der Stulpstange mit Druck beaufschlagt.

Dabei werden die Treibstange und die Stulpstange derart über eine Matrize geführt, dass die Treibstange und die Stulpstange an verschiedenen Seiten der Matrize anliegen.

Dabei erweist es sich als vorteilhaft, dass durch die gegenläufigen Aktionsrichtungen der Stempel und durch die Druckbeaufschlagung beider Stempel beim Stanzen des Profils die Kräfte zumindest teilweise abgestützt werden, die bei der Stanzung des Profils auftreten.

Dies erweist sich insbesondere bei dem bisher bekannten zahnförmigen Profils als besonders vorteilhaft, weil bei der Stanzung des zahnförmigen Profils wegen der Länge der zu stanzenden Linie vergleichsweise große Kräfte auftreten.

Bei der Ausgestaltung nach Anspruch 5 ist auch während der Ablängung der Treibstange der Stempel zur Ablängung der Stulpstange mit Druck beaufschlagt.

Dies betrifft die Ausgestaltung, bei der die Ablängung der Treibstange zeitversetzt erfolgt zur Stanzung des Profils in die Treibstange.

Hierbei erweist es sich als vorteilhaft, dass auch die bei der Ablängung der Treibstange auftretenden Kräfte abgestützt werden können. Da hierbei die Stanzlinie kürzer ist als bei der Stanzung des Profils, sind diese Kräfte zwar kleiner. Es hat sich jedoch als vorteilhaft erwiesen, auch diese Kräfte abstützen zu können.

Bei der Ausgestaltung des Verfahrens nach Anspruch 6 wird zuerst der Stempel zur Ablängung der Stulpstange mit Druck beaufschlagt. Diese Druckbeaufschlagung wird während des Stanzvorganges der Treibstange aufrecht erhalten.

Dabei erweist es sich als vorteilhaft, dass die Kräfte des Stempels zur Stanzung der Treibstange abgestützt werden.

Der Stanzvorgang der Treibstange betrifft das Ablängen sowie das zeitgleiche oder zeitversetzte Einbringen des Profils in die Seitenkante der Treibstange.

Ein Ausführungsbeispiel ist in der Zeichnung dargestellt. Es zeigt dabei:
- Fig. 1:: eine Stanze mit gegenüber liegenden Stanzstempeln im ausgerückten Zustand,
- Fig. 2:: die Stanze nach Figur 1 bei einem Arbeitsvorgang,
- Fig. 3:: eine Detailansicht der Stanze und
- Fig. 4:: ein Detail aus der Stanze nach Figur 3.

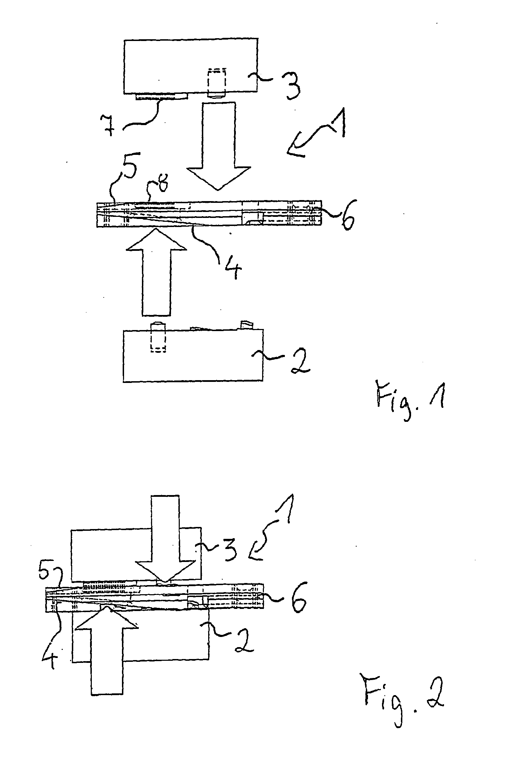

Figur 1 zeigt eine Stanze 1 mit gegenüber liegenden Stanzstempeln 2, 3 in deren ausgerücktem Zustand. Die sich gegenüber liegenden Stanzstempel 2, 3 haben zueinander entgegen gesetzte Aktionsrichtungen. Ein Fensterbeschlag mit einer Stulpstange 4 und einer Treibstange 5 ist derart zu einer Matrize 6 positionierbar, dass die Matrize 6 als Gegenlager der Stanzstempel 2 und 3 wirkt. Es ist zu sehen, dass an dem Stanzstempel 3 der Treibstange 5 ein Teil 7 angebracht ist, das bei dem Stanzvorgang im Zusammenwirken mit einem Gegenstück 8 in der Matrize 6 das Einbringen der Verzahnung in die Treibstange 5 bewirkt.

Bei der dargestellten Ausführungsform erfolgt entsprechend der Darstellung der Figur 2 der Arbeitsvorgang der Stanzstempel 2 und 3 gleichzeitig, so dass die Matrize 6 bei dem Arbeitsvorgang in der Darstellung der Figur 1 sowohl von oben wie auch von unten mit einer Kraft beaufschlagt wird. Die Kräfte der Stanzstempel 2 und 3, die bei dem Arbeitsvorgang auf die Matrize 6 einwirken, wirken also gerade als Gegenkraft auf die ausgeübte Kraft des anderen Stanzstempels 3, 2. Vorteilhaft sind dabei die Stanzstempel 2 und 3 für eine identische Dauer mit dem Arbeitsdruck beaufschlagt. Es ist auch möglich, die Druckbeaufschlagung des Stempels 3 früher zu beginnen.

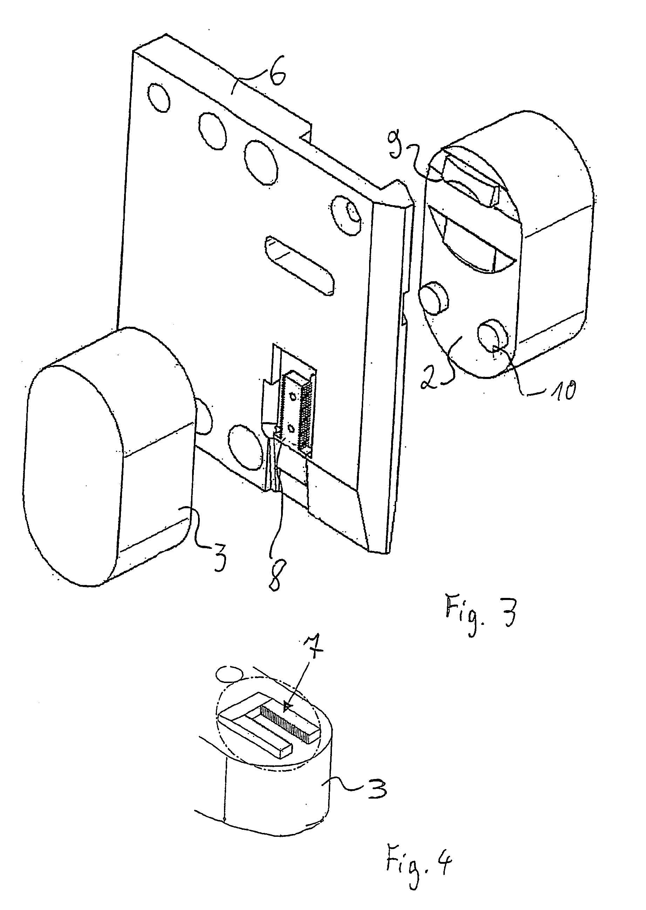

Figur 3 zeigt eine Detailansicht der Stanze 1. Es ist der Stanzstempel 2 zu sehen, der den Ablängstempel der Stulpstange 4 bildet. Ebenso ist der Stanzstempel 3 zu sehen, der den Ablängstempel der Treibstange 5 bildet. Außerdem weist der Stanzstempel 3 das Teil 7 auf (hier aus perspektivischen Gründen nicht zu sehen), das mit dem Gegenstück 8 der Matrize 6 zusammenwirkt und damit die Verzahnung in die Treibstange 5 einbringt.

Es ist an dem Stanzstempel 2 noch zu sehen, dass dieser außer der Schneidkante 9 noch Stützfüße 10 aufweist.

Das Gegenstück 8 ist vorteilhaft von der Matrize 6 demontierbar und separat austauschbar. Das Gegenstück 8 kann beispielsweise ein Erodierteil sein. Dies erweist sich hinsichtlich des Aufwands bei dem durch Verschleiß bedingten Austausch von Teilen als sinnvoll. Durch die lange Stanzlinie des zahnförmigen Profils der Treibstange 5 treten bei dieser Stanzung entsprechend große Kräfte auf. Vorteilhaft ist das entsprechend stark belastete Gegenstück 8 der Matrize 6 separat austauschbar.

Figur 4 zeigt einen Ausschnitt des Stanzstempels 3 mit dem Teil 7. Vorteilhaft ist auch dieses Teil separat von dem Stanzstempel 3 demontierbar und austauschbar. Vorteilhaft ist auch dieses Teil 7 ein Erodierteil.

## Patentansprüche

1. Verfahren zur Bearbeitung eines Fensterbeschlages, wobei durch einen Stanzvorgang in die Treibstange (5) des Fensterbeschlages ein Profil eingebracht wird, um die Treibstange bei eingebautem Fenster bewegen zu können,
**dadurch gekennzeichnet, dass** das Profil im Zusammenhang mit dem Arbeitsschritt eingebracht wird, in dem die Treibstange (5) durch einen Stanzvorgang abgelängt wird (3).

2. Verfahren nach Anspruch 1,
**dadurch gekennzeichnet, dass** in dem Arbeitsschritt die Stanzvorgänge der Ablängung der Treibstange (5) und der Einbringung des Profils in die Seitenkante derart getrennt sind, dass die Stanzvorgänge bei einer Bewegung eines Arbeitszylinders zeitlich nacheinander ausgeführt werden.

3. Verfahren nach Anspruch 2,
**dadurch gekennzeichnet, dass** auch die Ablängung der Stulpstange (4) in dem Arbeitsschritt durch einen Stanzvorgang vorgenommen wird, wobei dieser Stanzvorgang zeitlich versetzt zu der Ablängung der Treibstange (5) sowie der Einbringung des Profils in die Treibstange (5) vorgenommen wird.

4. Verfahren nach Anspruch 1 oder 2,
**dadurch gekennzeichnet, dass** das aus Treibstange (5) und Stulpstange (4) bestehende Werkstück zwischen zwei Stempel (2, 3) mit gegenläufiger Aktionsrichtung zur Durchführung des Stanzvorgangs einführbar ist und dass zumindest während des Einbringens des Profils in die Treibstange (5) der Stempel (2) zur Ablängung der Stulpstange (4) mit Druck beaufschlagt ist.

5. Verfahren nach Anspruch 4,
**dadurch gekennzeichnet, dass** auch während der Ablängung der Treibstange (5) der Stempel (2) zur Ablängung der Stulpstange (4) mit Druck beaufschlagt ist.

6. Verfahren nach Anspruch 4 und 5,
**dadurch gekennzeichnet, dass** zuerst der Stempel (3) zur Ablängung der Stulpstange (4) mit Druck beaufschlagt wird und dass diese Druckbeaufschlagung während des Stanzvorganges der Treibstange (5) aufrecht erhalten wird.

## Claims

1. Method of processing a window fitting, a profile being incorporated into the drive rod (5) of the window fitting by a punching process so that the drive rod can be moved once the window has been installed,
**characterised in that** the profile is incorporated in conjunction with the work step in which the drive rod (5) is cut to length by a punching operation (3).

2. Method according to claim 1,
**characterised in that** the punching operations for cutting the drive rod (5) to length and for incorporating the profile into the lateral edge are separated in the work step in such manner that during a movement of a working cylinder, the punching operations are performed successively one after the other.

3. Method according to claim 2,
**characterised in that** the cuff bar (4) is also cut to length during the work step by a punching operation, this punching operation being temporally staggered with respect to the cutting-to-length of the drive rod (5) and to the incorporation of the profile into the drive rod (5).

4. Method according to claim 1 or 2,
**characterised in that** the workpiece consisting of the drive rod (5) and the cuff bar (4) can be inserted between two counter-directional punches (2, 3) for carrying out the punching operation, and that, at least while the profile is being incorporated into the drive rod (5), pressure is applied to the punch (2) that cuts the cuff bar (4) to length.

5. Method according to claim 4,
**characterised in that**, also while the drive rod (5) is being cut to length, pressure is exerted on the punch (2) that cuts the cuff bar (4) to length .

6. Method according to claim 4 or 5,
**characterised in that** pressure is applied first to the punch (3) that cuts the cuff bar (4) to length, and that this application of pressure is maintained during the punching operation on the drive rod (5).

## Revendications

1. Procédé d'usinage d'une ferrure de fenêtre, un profil étant réalisé dans la tringle (5) de la ferrure de fenêtre à l'aide d'une opération de poinçonnage afin de pouvoir bouger la tringle lorsque la fenêtre est montée, **caractérisé en ce que** le profil est réalisé lors de l'étape durant laquelle la tringle (5) est coupée à la longueur souhaitée par une opération de poinçonnage.

2. Procédé selon la revendication 1, **caractérisé en ce que** les opérations de poinçonnage pour couper à la longueur la tringle (5) et pour réaliser le profil dans les arêtes latérales sont séparées l'une de l'autre au cours du déroulement de la procédure de telle sorte que les opérations de poinçonnage sont réalisées l'une après l'autre avec un mouvement du cylindre de travail.

3. Procédé selon la revendication 2, **caractérisé en ce que** la coupe à la longueur souhaitée de la barre d'inversement (4) est également réalisée durant l'étape de travail au moyen d'une opération de poinçonnage, cette opération de poinçonnage étant décalée dans le temps par rapport à la coupe à la longueur souhaitée de la tringle (5) et la réalisation du profil dans la tringle (5).

4. Procédé selon la revendication ou 2, **caractérisé en ce que** la pièce à usiner constituée de la tringle (5) et de la barre d'inversement (4) peut être introduite entre deux tampons (2, 3) ayant des directions d'action opposées en vue de réaliser l'opération de poinçonnage, et **en ce que** le tampon (2) destiné à la coupe à la longueur souhaitée de la barre d'inversement (4) est soumis à la pression au moins durant la réalisation du profil dans la tringle (5).

5. Procédé selon la revendication 4, **caractérisé en ce que** le tampon (2) destiné à la coupe à la longueur souhaitée de la barre d'inversement (4) est soumis à la pression également durant la coupe à la longueur souhaitée de la tringle (5).

6. Procédé selon la revendication 4 ou 5, **caractérisé en ce que** le tampon (3) destiné à la coupe à la longueur souhaitée de la barre d'inversement (4) est tout d'abord soumis à la pression, et **en ce que** cette pression est maintenue durant l'opération de poinçonnage de la tringle (5).
